# EUROPEAN PATENT APPLICATION

(11) **EP 2 015 581 A1**
(43) Date of publication of application: **14.01.2009**
(21) Application number: 07739227.2
(22) Date of filing: 14.03.2007
(51) Int. Cl.: H04N 7/26

(54) **DYNAMIC IMAGE PROCESSING METHOD, PROGRAM FOR THE DYNAMIC IMAGE PROCESSING METHOD, RECORDING MEDIUM CONTAINING THE PROGRAM FOR THE DYNAMIC IMAGE PROCESSING METHOD, DYNAMIC IMAGE PROCESSING DEVICE**

(30) Priority: 02.05.2006 JP 2006128093
(71) Applicant: Sony Corporation, Tokyo 108-0075 (JP)
(72) Inventor: OGURA, Takayuki, Minato-ku, Tokyo 108-0075 (JP); SHIGEMOTO, Daijou, Minato-ku, Tokyo 108-0075 (JP)
(74) Representative: Thévenet, Jean-Bruno
(86) International application number: PCT/JP2007/055784
(87) International publication number: WO 2007/129508

(57) **Abstract**

The present invention is applied, for example, to a moving image encoding apparatus and decoding apparatus based on ITU-T H.264. Syntax elements with a high frequency of appearance are processed using probability state variables held in a second memory 13 whose access latency is small, and other syntax elements are processed using probability state variables held in a first memory 12 whose access latency is large.

## Description

### Background of the Invention

### Technical Field

The present invention relates to a moving image processing method, a program of the moving image processing method, a recording medium having the program of the moving image processing method recorded thereon, and a moving image processing apparatus, and is applicable to, for example, an encoding apparatus and a decoding apparatus for moving images based on ITU (International Telecommunication Union)-T H.264. The present invention processes syntax elements with a high frequency of appearance using probability state variables held in a second memory whose access latency is small and processes other syntax elements using probability state variables held in a first memory whose access latency is large, thus avoiding an increase in size of the overall structure and increasing the processing speed compared with the past.

### Background Art

Hitherto, a moving image coding process has applied a technique of an entropy coding process to efficiently perform data compression of a moving image. Also in MPEG (Moving Picture Experts Group) 2, MPEG 4, etc., a variable length coding process is applied to this entropy coding process. Furthermore, in ITU-T H.264, a context-based adaptive binary arithmetic coding process (CABAC: Context-based Adaptive Binary Arithmetic Coding) is applied to this entropy coding process.

Here, since the context-based adaptive binary arithmetic coding process can efficiently perform data compression compared with the variable length coding process, when data transmission is performed at a certain bit rate, the image quality can be improved by the coding process in ITU-T H.264 compared with coding processes in MPEG 2 and MPEG 4. However, the context-based adaptive binary arithmetic coding process has weak points that it involves complicated processing and a large processing load compared with the variable length coding process.

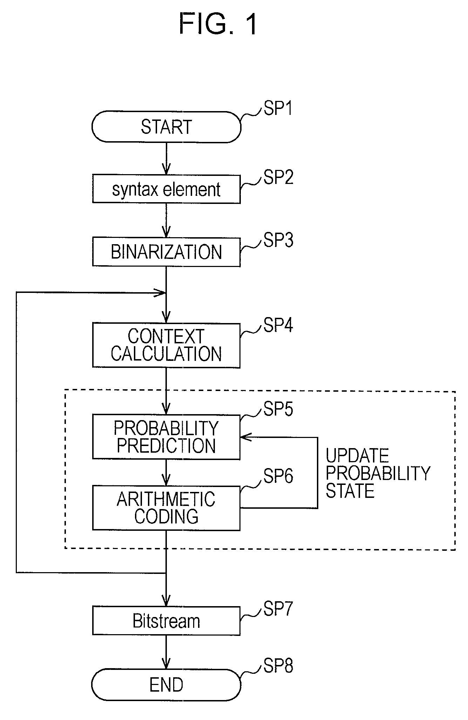

Fig. 1 is a flowchart showing a processing procedure of this context-based adaptive binary arithmetic coding process. The context-based adaptive binary arithmetic coding process sequentially executes this process for each of successive syntax elements. By executing the processing procedure in Fig. 1, the context-based adaptive binary arithmetic coding process performs context calculations on the successive syntax elements to sequentially detect probability state variables that may be taken by the individual syntax elements. Further, the context-based adaptive binary arithmetic coding process sequentially selects and processes the detected probability state variables to encode the syntax elements.

That is, when the context-based adaptive binary arithmetic coding process starts this process, the context-based adaptive binary arithmetic coding process proceeds from step SP1 to step SP2 and obtains multi-valued syntax elements to be processed. With a binarization process in step SP3 thereafter, the context-based adaptive binary arithmetic coding process binarizes the syntax elements obtained in step SP2 in accordance with rules according to the type of each syntax element.

Thereafter, with a context calculation process in step SP4, the context-based adaptive binary arithmetic coding process obtains context indices (ctxIdx) for the positions of the individual binary values converted in step SP3. Here, a context index (ctxIdx) is an index that specifies a probability state variable. A probability state variable is a variable that indicates the frequency of appearance of each value of binary values. A probability state variable is represented by an MPS (most probable symbol) and a state index (stateIdx) corresponding to the value of each binary value. Here, the MPS (most probable symbol) is a flag indicating whether the value is a symbol with a high probability of occurrence, and the state index (stateIdx) is an index indicating a probability-of-occurrence table of the MPS symbol. Therefore, the context-based adaptive binary arithmetic coding process obtains, with the context calculation process in step SP4, a probable state variable that may be taken by each binary value of the syntax elements to be processed in terms of a context index (ctxIdx).

Subsequently, the context-based adaptive binary arithmetic coding process selects, in a probability prediction process in step SP5, the MPS (most probable symbol) and the state index (stateIdx) corresponding to the value of a binary value to be processed on the basis of the context index (ctxIdx) obtained in step SP4.

The context-based adaptive binary arithmetic coding process executes, in an arithmetic coding process in step SP6 thereafter, an arithmetic coding process using the MPS (most probable symbol) and the state index (stateIdx) selected in step SP5.

The context-based adaptive binary arithmetic coding process repeats the processing procedure of steps SP4-SP5-SP6-SP4 on all the binary values, starting from a binary value on the low order side, until processing of all the binary values to be encoded is completed, thus sequentially generating a bitstream. Further, when the processing of all the binary values to be encoded is completed, the process proceeds from step SP6 to step SP7, and the generated bitstream is output. The process proceeds to step SP8, and the processing procedure ends.

Also, as indicated by the arrow from step SP6 to step SP4, when the context-based adaptive binary arithmetic coding process processes one syntax element, the context-based adaptive binary arithmetic coding process updates probability state variables held in a memory on the basis of the processing result. When performing a coding process on the same syntax element, the context-based adaptive binary arithmetic coding process executes the coding process using the updated probability state variables.

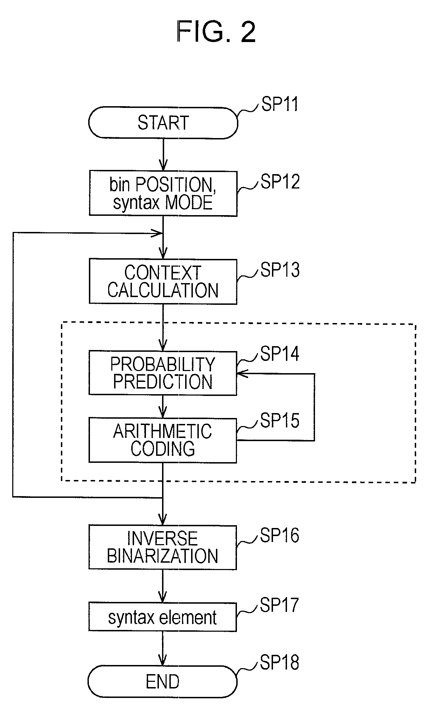

In contrast, Fig. 2 is a flowchart showing a context-based adaptive binary arithmetic decoding process. The context-based adaptive binary arithmetic decoding process executes this process for each syntax element. As in the context-based adaptive binary arithmetic coding process, the context-based adaptive binary arithmetic decoding process performs context calculations on successive syntax elements to sequentially detect probability state variables that may be taken by the individual syntax elements. Further, the context-based adaptive binary arithmetic decoding process sequentially selects and processes the detected probability state variables to decode the syntax elements.

That is, when the context-based adaptive binary arithmetic decoding process starts this processing procedure, the context-based adaptive binary arithmetic decoding process proceeds from step SP11 to step SP12. Here, the context-based adaptive binary arithmetic decoding process detects, from a bitstream on which the decoding process is to be performed, a syntax mode that specifies the type of syntax element and bin which is information that specifies the position of a bit to be processed.

Further, in step SP13 thereafter, the context-based adaptive binary arithmetic decoding process performs a context calculation using the information obtained in step SP12 to obtain a corresponding context index (ctxIdx), as in the context-based adaptive binary arithmetic coding process. Using this context index (ctxIdx), the context-based adaptive binary arithmetic decoding process sequentially obtains an MPS and a state index (stateIdx), as in the context-based adaptive binary arithmetic coding process. Further, with an arithmetic coding process using the obtained MPS and state index (stateIdx), the context-based adaptive binary arithmetic decoding process obtains the original binary value, in contrast to the time at which encoding is performed. In step SP17, the context-based adaptive binary arithmetic decoding process obtains a multi-valued number from the binary value to decode the original syntax element. Also, as in the context-based adaptive binary arithmetic coding process, the context-based adaptive binary arithmetic decoding process updates probability state variables on the basis of the processing result. When performing a decoding process on the same syntax element, the context-based adaptive binary arithmetic decoding process executes the decoding process using the updated probability state variables.

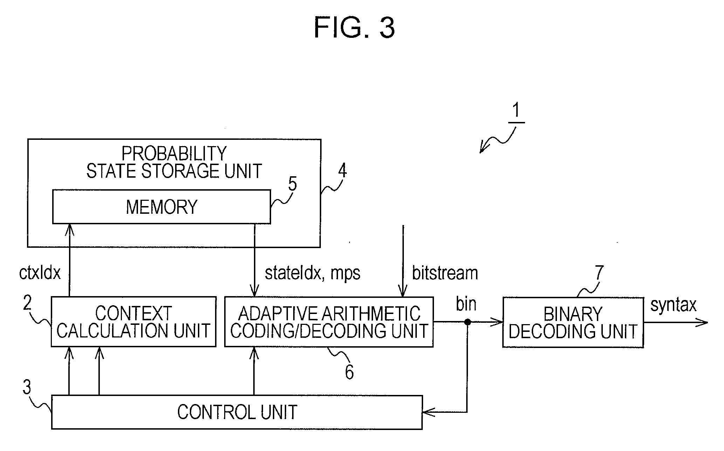

Fig. 3 is a block diagram showing a decoding apparatus that executes the context-based adaptive binary arithmetic decoding process.

In this decoding apparatus 1, under control of a control unit 3, a context calculation unit 2 obtains context indices (ctxIdx) from a bitstream to be processed. A probability state storage unit 4 stores and holds probability state variables specified by these context indices (ctxIdx) in a memory 5. In response to access from an adaptive arithmetic coding/decoding unit 6, the probability state storage unit 4 notifies the adaptive arithmetic coding/decoding unit 6 of the held probability state variables. Note that there are, for example, in coefficient data processing, 7 bit x 59 types of probability state variables stored in the memory 5.

The adaptive arithmetic coding/decoding unit 6 generates binarized data from the bitstream to be processed and, with a probability prediction using the binarized data, sequentially selects state indices (stateIdx) and MPS. The adaptive arithmetic coding/decoding unit 6 generates syntax information by processing the state indices (stateIdx) and MPS and executes an arithmetic decoding process. On the basis of the processing result of the adaptive arithmetic coding/decoding unit 6, a binary decoding unit 7 decodes and outputs the original syntax element (syntax).

The control unit 3 is a control unit that controls the operation of the overall decoding apparatus 1. The control unit 3 instructs the context calculation unit 2 to perform context calculations using the binarized data generated by the adaptive arithmetic coding/decoding unit 6. Also, the control unit 3 notifies the adaptive arithmetic coding/decoding unit 6 of the context indices (ctxIdx) obtained by the context calculation unit 2 and instructs the binary decoding unit 7 to perform a process on the processing result of the adaptive arithmetic coding/decoding unit 6.

Prior to the start of processing 1 NAL (Network Abstraction Layer) unit, the control unit 3 initializes the probability state variables held in the memory 5 of the probability state storage unit 4 and then updates the probability state variables stored in the memory 5 in accordance with the processing result of the adaptive arithmetic coding/decoding unit 6. Also in coefficient data processing, the control unit 3 sets, on the basis of the execution result of the adaptive arithmetic coding/decoding unit 6 when processing one item of coefficient data, the number of binary values to be processed using the subsequent coefficient data.

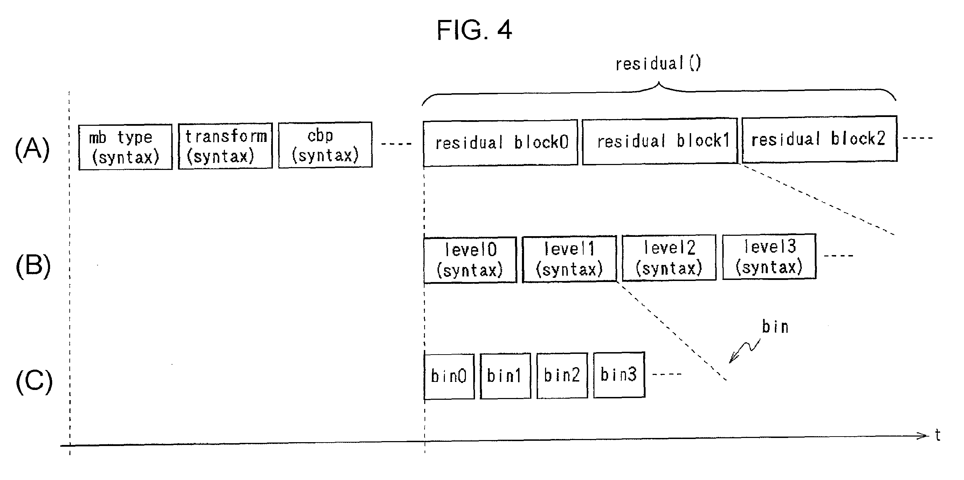

Fig. 4 is a time chart provided to describe a process on successive syntax elements in the decoding apparatus 1. A context-based adaptive binary arithmetic decoding process is applied to a plurality of syntax elements below a slice data layer defined in ITU-T H.264. Therefore, the decoding apparatus 1 sequentially processes, on a macroblock-by-macroblock basis, syntax elements such as a macroblock type (mb type), a transform, a code brock pattern (cbp), and a sub-macroblock type (sub mb type), and then processes a residual layer in macroblock processing (Fig. 4(A) and (C)). Here, the residual layer is divided into 4x4-pixel residual blocks. Coefficient data (coeff abs level minus1 (indicated by level in Fig. 4) which is obtained by performing a discrete cosine transform process and a quantization process on image data is assigned to each of the residual blocks (Fig. 4(B)). The decoding apparatus 1 sequentially performs a coding process on the coefficient data (coeff abs level minus1) of the successive residual blocks in this residual layer (Fig. 4(C)).

Regarding syntax elements such as the macroblock type (mb type), the transform, the code brock pattern (cbp), and the sub-macroblock type (sub mb type), only one exits in one macroblock. In contrast, there are 64 items of coefficient data (coeff abs level minus1) for the residual blocks. Therefore, for example, when so-called 4:2:0 image data is to be processed, since a luma signal macroblock is formed by 16 x 16 pixels, and chroma signal macroblocks are formed by 8 x 8 pixels, in this case, there are 6 x 64 = 384 items of coefficient data (coeff abs level minus1) for one macroblock.

Therefore, when the decoding apparatus 1 performs a coding process on the coefficient data (coeff abs level minus1) of the residual blocks, the decoding apparatus 1 initializes the probability state variables recorded in the memory 5 at first, and then sequentially updates the probability state variables stored in the memory 5 in accordance with the processing result of the adaptive arithmetic coding/decoding unit 6. Note that this initialization process is executed at the time at which 1 NAL (Network Abstraction Layer) unit is started. Also, the decoding apparatus 1 sets, on the basis of the execution result of the adaptive arithmetic coding/decoding unit 6 when processing one item of coefficient data (coeff abs level minus1), the number of binary values to be processed using the subsequent coefficient data (coeff abs level minus1).

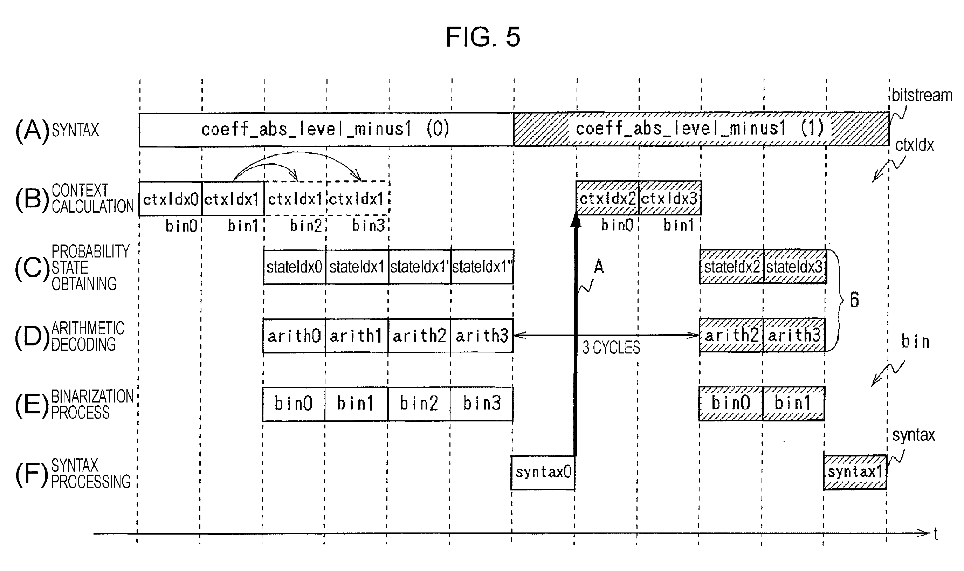

Fig. 5 is a time chart provided to describe successive processes on coefficient data (coeff abs level minus1) of the residual blocks. Note that Fig. 5 corresponds to the case where the memory 5 in Fig. 3 is configured using an SRAM whose access latency is large. Also, the segment of each process corresponds to 1 cycle which is a processing unit. After initializing the content of the memory 5 at first, the decoding apparatus 1 calculates contexts of the first coefficient data (coeff abs level minus1 (0)) using the context calculation unit 2 (Fig. 5(A) and (B)). Note that the example in Fig. 5 is the case where the context index (ctxIdx0) is obtained with the least significant binary value by calculating this context, and one context index (ctxIdx1) is successively obtained with the subsequent second to fourth binary values. Therefore, of these two context indices (ctxIdx0) and (ctxIdx1), the second context index (ctxIdx1) is used to process the second to fourth binary values. Note that, in the following, each item of coefficient data is indicated, as needed, using a numeral in parentheses which indicates the order from the beginning.

In the decoding apparatus 1, the state index (stateIdx0) and MPS to be recorded in the memory 5 are selected by calculating the probability (arith0) using the adaptive arithmetic coding/decoding unit 6 on the basis of the first context index (ctxIdx0) of the context indices (ctxIdx0) and (ctxIdx1) (Fig. 5(C) and (D)). Further, by calculating the subsequent probability (arith1), the state index (stateIdx1) and MPS to be recorded in the memory 5 are selected on the basis of the context index (ctxIdx1). The decoding apparatus 1 repeats the selection of the state index (stateIdx) and MPS for the number of binary values to be processed, processes the processing result bin using the binary decoding unit 7, and decodes the syntax element (syntax0) (Fig. 5(E) and (F)). Also, as indicated by arrow A, after updating the probability state variables recorded in the memory 5 on the basis of the processing result, the decoding apparatus 1 similarly processes the subsequent coefficient data (coeff abs level minus1).

With respect to such a context-based adaptive binary decoding apparatus, schemes for increasing the processing speed are proposed in Japanese Unexamined Patent Application Publication No. 2005-130099, Japanese Unexamined Patent Application Publication No. 2005-217871, and the like.

By the way, in this type of encoding apparatus and decoding apparatus, the processing speed is desired to be increased. After examining the operation of the decoding apparatus 1 shown in Fig. 1 with view to increase the speed, it has been realized that there is a problem that an idle time occurs between processes on successive syntax elements (syntax).

That is, as shown in Fig. 5, when the memory 5 is configured using an SRAM whose access latency is large, the state index (stateIDx) and MPS of the probability state variable are obtained 2 cycles later after the context is calculated. In the example in Fig. 5, processes on the probability state variables based on the context calculation results are executed in the subsequent 4 cycles, thus decoding the syntax element (syntax). Note that the processes on the probability state variables based on the context calculation results are a process of obtaining the probability state variables, an arithmetic decoding process, and a binarization process. In the example in Fig. 5, these processes are executed using a pipeline system. Further, after the syntax element (syntax) is decoded, the recording in the memory 5 is updated on the basis of the processing result, and a process on the subsequent coefficient data (coeff abs level minus1) is started. Therefore, when the memory 5 is configured using an SRAM whose access latency is large, in the conventional decoding apparatus 1, an idle time of 3 cycles occurs from when processes on the probability state variables are completed in one syntax element to when processes on the probability state variables start in the subsequent syntax element.

The idle time of 3 cycles occurs in processes on all items of coefficient data. Since the idle time occurs in processes on successive items of coefficient data in one macroblock, the idle time is significantly large when viewed as a whole.

As one method of solving this problem, a method of applying a register whose access latency is 0 to the memory 5 and holding the probability state variables is conceivable. However, in the case of this method, although the above-described idle time of 3 cycles can be reduced to 1 cycle, the area of the memory 5 is increased, compared with the SRAM. There is a problem that the overall structure increases in size.

### Disclosure of Invention

In view of the foregoing points, the present invention provides a moving image processing method, a program of the moving image processing method, a recording medium having the program of the moving image processing method recorded thereon, and a moving image processing apparatus which can avoid an increase in size of the overall structure and increase the processing speed compared with the past.

In order to solve the foregoing problems, the present invention is applied to a moving image processing method of calculating contexts and encoding or decoding a moving image, characterized by including a context calculation processing step of calculating contexts of syntax elements constituting the moving image and sequentially detecting probability state variables that may be taken by the syntax elements; and a probability state variable processing step of sequentially selecting and processing the probability state variables obtained in the context calculation processing step and encoding or decoding the syntax elements. The probability state variable processing step includes a probability state variable selecting step of selecting the probability state variables held in a probability state storage unit. A first memory and a second memory whose access latency is small compared with the first memory are provided in the probability state storage unit. The probability state variable selecting step sequentially selects the probability state variables from the first memory when processing the syntax elements which have a low frequency of appearance, and sequentially selects the probability state variables from the second memory when processing the syntax elements which have a high frequency of appearance.

In the structure of the present invention, the structure of selecting the probability state variables using the second memory whose access latency is small can increase the processing speed, although the overall shape is increased in size. In contrast, the structure of selecting the probability state variables using the first memory whose access latency is large has difficulty in increasing the processing speed, although the overall shape is reduced in size. Therefore, according to the structure of Claim 1, when it is configured so that the probability state variables are sequentially selected from the first memory when a syntax element with a low frequency of appearance is to be processed, and the probability state variables are sequentially selected from the second memory when a syntax element with a high frequency of appearance is to be processed, the structure can make use of advantageous effects of the two in the case where the first and second memories are used, thus avoiding an increase in size of the overall structure and increasing the processing speed, compared with the past.

Further, the present invention is applied to a program of a moving image processing method of calculating contexts and encoding or decoding a moving image, characterized by including a context calculation processing step of calculating contexts of syntax elements constituting the moving image and sequentially detecting probability state variables that may be taken by the syntax elements; and a probability state variable processing step of sequentially selecting and processing the probability state variables obtained in the context calculation processing step and encoding or decoding the syntax elements. The probability state variable processing step includes a probability state variable selecting step of selecting the probability state variables held in a probability state storage unit. A first memory and a second memory whose access latency is small compared with the first memory are provided in the probability state storage unit. The probability state variable selecting step sequentially selects the probability state variables from the first memory when processing the syntax elements which have a low frequency of appearance, and sequentially selects the probability state variables from the second memory when processing the syntax elements which have a high frequency of appearance.

In the structure of the present invention, the structure of selecting the probability state variables using the second memory whose access latency is small can increase the processing speed, although the overall shape is increased in size. In contrast, the structure of selecting the probability state variables using the first memory whose access latency is large has difficulty in increasing the processing speed, although the overall shape is reduced in size. Therefore, according to the structure of the present invention, when it is configured so that the probability state variables are sequentially selected from the first memory when a syntax element with a low frequency of appearance is to be processed, and the probability state variables are sequentially selected from the second memory when a syntax element with a high frequency of appearance is to be processed, the structure can make use of advantageous effects of the two in the case where the first and second memories are used, thus avoiding an increase in size of the overall structure and increasing the processing speed, compared with the past.

Further, the present invention is applied to a recording medium having recorded thereon a program of a moving image processing method of calculating contexts and encoding or decoding a moving image. The program of the moving image processing method is characterized by including a context calculation processing step of calculating contexts of syntax elements constituting the moving image and sequentially detecting probability state variables that may be taken by the syntax elements; and a probability state variable processing step of sequentially selecting and processing the probability state variables obtained in the context calculation processing step and encoding or decoding the syntax elements. The probability state variable processing step includes a probability state variable selecting step of selecting the probability state variables held in a probability state storage unit. A first memory and a second memory whose access latency is small compared with the first memory are provided in the probability state storage unit. The probability state variable selecting step sequentially selects the probability state variables from the first memory when processing the syntax elements which have a low frequency of appearance, and sequentially selects the probability state variables from the second memory when processing the syntax elements which have a high frequency of appearance.

In the structure of the present invention, the structure of selecting the probability state variables using the second memory whose access latency is small can increase the processing speed, although the overall shape is increased in size. In contrast, the structure of selecting the probability state variables using the first memory whose access latency is large has difficulty in increasing the processing speed, although the overall shape is reduced in size. Therefore, according to the structure of the present invention, when it is configured so that the probability state variables are sequentially selected from the first memory when a syntax element with a low frequency of appearance is to be processed, and the probability state variables are sequentially selected from the second memory when a syntax element with a high frequency of appearance is to be processed, the structure can make use of advantageous effects of the two in the case where the first and second memories are used, thus avoiding an increase in size of the overall structure and increasing the processing speed, compared with the past.

Further, the present invention is applied to a moving image processing apparatus that calculates contexts and encodes or decodes a moving image, characterized by including a context calculation unit that calculates contexts of syntax elements constituting the moving image and sequentially detects probability state variables that may be taken by the syntax elements; a probability state storage unit in which a first memory and a second memory whose access latency is small compared with the first memory are provided, the probability state variables being held in the first and second memories; and a probability state variable processing unit that sequentially selects and processes the probability state variables from the probability state storage unit on the basis of a detection result of the context calculation unit, and encodes or decodes the syntax elements. The probability state variable processing unit sequentially selects the probability state variables from the first memory when processing the syntax elements which have a low frequency of appearance, and sequentially selects the probability state variables from the second memory when processing the syntax elements which have a high frequency of appearance.

In the structure of the present invention, the structure of selecting the probability state variables using the second memory whose access latency is small can increase the processing speed, although the overall shape is increased in size. In contrast, the structure of selecting the probability state variables using the first memory whose access latency is large has difficulty in increasing the processing speed, although the overall shape is reduced in size. Therefore, according to the structure of the present invention, when it is configured so that the probability state variables are sequentially selected from the first memory when a syntax element with a low frequency of appearance is to be processed, and the probability state variables are sequentially selected from the second memory when a syntax element with a high frequency of appearance is to be processed, the structure can make use of advantageous effects of the two in the case where the first and second memories are used, thus avoiding an increase in size of the overall structure and increasing the processing speed, compared with the past.

According to the present invention, an increase in size of the overall structure can be avoided, and the processing speed can be increased, compared with the past.

### Brief Description of Drawings

Fig. 1 is a flowchart showing a processing procedure of a context-based adaptive binary arithmetic coding process.
Fig. 2 is a flowchart showing a processing procedure of a context-based adaptive binary arithmetic decoding process.
Fig. 3 is a block diagram showing a decoding apparatus based on a conventional context-based adaptive binary arithmetic process.
Fig. 4 is a time chart provided to describe a process on successive syntax elements in the decoding apparatus in Fig. 3.
Fig. 5 is a time chart provided to describe successive processes on coefficient data of residual blocks in the decoding apparatus in Fig. 3.
Fig. 6 is a block diagram showing a decoding apparatus of an embodiment 1 of the present invention.
Fig. 7 is a time chart provided to describe the operation of the decoding apparatus in Fig. 6.
Fig. 8 is a schematic diagram showing a context index transition in the decoding apparatus in Fig. 6.
Fig. 9 is a schematic diagram showing one example of the transition in Fig. 8.
Fig. 10 is a schematic diagram showing the structure of a register in the decoding apparatus in Fig. 6.
Fig. 11 is a schematic diagram provided to describe a decoding apparatus of an embodiment 2 of the present invention.
Fig. 12 is a block diagram provided to describe a decoding apparatus of an embodiment 3 of the present invention.

### Best Modes for Carrying Out the Invention

Hereinafter, embodiments of the present invention will be described in detail with reference to the drawings as needed.

### (1) Structure of Embodiment 1

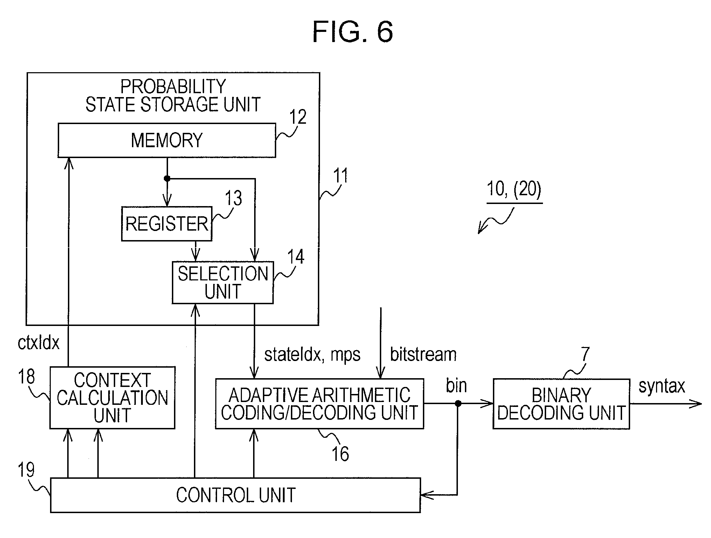

Fig. 6 is a block diagram showing a decoding apparatus of an embodiment 1 of the present invention, in contrast to Fig. 3. In a decoding apparatus 1, the same structure as that of the decoding apparatus 1 described with Fig. 3 is given a corresponding reference, and a repeated description thereof is omitted. The decoding apparatus 10 sequentially decodes syntax elements (syntax) from a bitstream in accordance with the rules in ITU-T H.264 and decodes image data of a moving image by performing an inverse quantization process and an inverse orthogonal transform process on the syntax elements (syntax). Note that each unit shown in Fig. 6 may be configured using hardware or may be configured using a functioning block of arithmetic processing means. Note that, when each unit is configured using a functioning block of arithmetic processing means, a program for the arithmetic processing means may be provided by installing it in advance. Alternatively, the program may be provided by recording it onto a recording medium, such as an optical disk, a magnetic disk, a memory card, or the like. Further, the program may be provided by downloading it via a network, such as the Internet or the like.

In the decoding apparatus 10, a first memory whose access latency is large and a second memory whose access latency is small compared with the first memory are provided in a probability state storage unit 11. Here, the first memory is formed by, in this embodiment, a memory 12 of, for example, an SRAM which consumes low power and has a small shape, compared with the second memory. In contrast, the second memory is formed by a register 13. Note that the register 13 is configured by, for example, a flip-flop.

The probability state storage unit 11 stores, in the memory 12, probability state variables for all syntax elements. Also, among the probability state variables stored in the memory 12, probability state variables that correspond to syntax elements with a high frequency of appearance and that are frequently used are loaded and held in the register 13. When decoding syntax elements with a high frequency of appearance, the decoding apparatus 10 processes the syntax elements with a high frequency of appearance using the probability state variables held in the register 13. In contrast, the decoding apparatus 10 processes syntax elements other than the syntax elements with a high frequency of appearance using data recorded in the memory 12. Specifically, in this embodiment, probability state variables for coefficient data (coeff abs level minus1) are assigned to the frequently used probability state variables.

In the probability state storage unit 11, under control of a control unit 19, a selection unit 14 switches the operation, and an access target of an adaptive arithmetic coding/decoding unit 16 is switched between the memory 12 and the register 13. Also, under control of the control unit 19, the probability state variables recorded in the memory 12 are updated on the basis of a decoding result. Furthermore, when loading, under control of the control unit 19, the probability state variables held in the memory 12 to the register 13 and updating the probability state variables recorded in the memory 12 on the basis of the decoding result, the corresponding probability state variables stored in the register 13 are updated so as to correspond to the recording in the memory 12.

Under control of the control unit 19, a context calculation unit 18 obtains context indices (ctxIdx) from a bitstream to be processed. In a process of decoding successive items of coefficient data (coeff abs level minus1 (1-N)), the context calculation unit 18 executes context calculations on the subsequent syntax element in a period in which the probability state variables for the context indices calculated in the immediately preceding syntax element are being processed.

The adaptive arithmetic coding/decoding unit 16 binarizes the bitstream so as to correspond to the context calculations in the context calculation unit 18 and notifies the control unit 19 of the binarized bitstream. Further, on the basis of the context indices (ctxIdx) obtained by the context calculation unit 18, the adaptive arithmetic coding/decoding unit 16 accesses the memory 12 and the register 13, sequentially selects MPS (most probable symbol) and state indices (stateIdx), and executes an arithmetic decoding process.

The control unit 19 is a control unit that controls the operation of the overall decoding apparatus 10. The control unit 19 controls the overall operation, as in the control unit 3 of the decoding apparatus 1 described above with Fig. 4, except for the coefficient data (coeff abs level minus1). That is, in this case, the control unit 19 instructs the context calculation unit 18 to perform context calculations on the binarized data generated by the adaptive arithmetic coding/decoding unit 16. Also, the control unit 19 instructs the adaptive arithmetic coding/decoding unit 16 and the binary decoding unit 7 to perform processes on the context indices (ctxIdx) obtained by the context calculation unit 18. Further, on the basis of the processing result of the adaptive arithmetic coding/decoding unit 16, the control unit 19 updates the probability state variables held in the probability state storage unit 11.

In contrast, when performing a decoding process on the coefficient data (coeff abs level minus1), the control unit 19 loads the probability state variables held in the memory 12 to the register 13 and controls the operation of each unit so as to execute selection of the state indices (stateIdx) and MPS using the probability state variables loaded in the register 13. Also, the control unit 19 controls the operation of the context calculation unit 18, the adaptive arithmetic coding/decoding unit 16, and the like so as to calculate, in a period in which the probability state variables for one syntax element are being processed, contexts in the subsequent syntax element and to store corresponding probability state variables in the register 13.

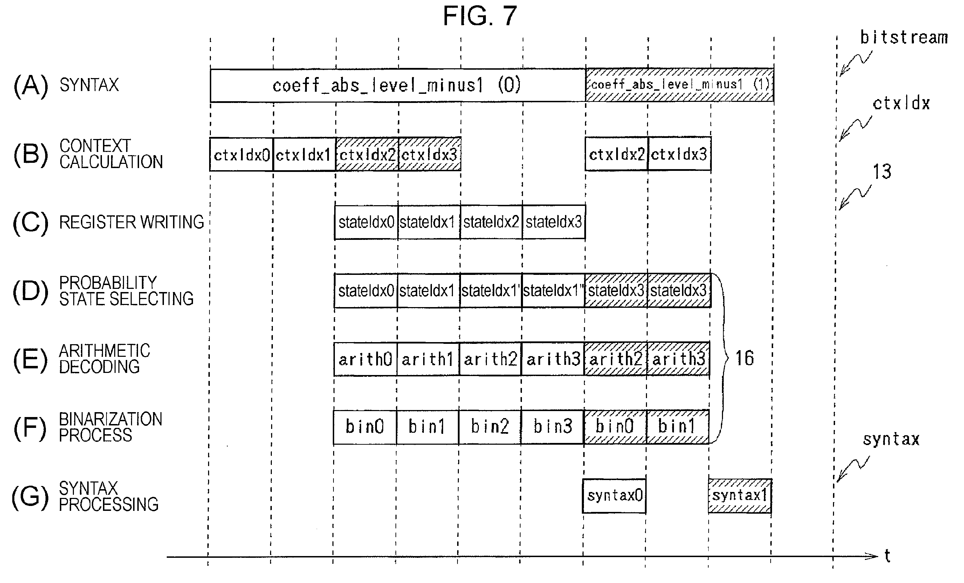

Fig. 7 is a time chart showing processes on coefficient data (coeff abs level Minus1) under control of the control unit 19, in contrast to Fig. 5. Note that, as in the case in Fig. 4, Fig. 7 corresponds to the case where the context index (ctxIdx0) and the context index (ctxIdx1) are individually obtained with the least significant binary value and the second to fourth binary values of the first coefficient data (coeff abs level minus1 (0)), and the context indices (ctxIdx2) and (ctxIdx3) are individually obtained with two successive binary values of the subsequent coefficient data (coeff abs level minus1 (1)).

When the control unit 19 starts a process on the coefficient data (coeff abs level minus1 (0)), the control unit 19 controls the context calculation unit 18 and the adaptive arithmetic coding/decoding unit 16 to sequentially obtain the context indices (ctxIdx0) and (ctxIdx1) in successive cycles (Fig. 7(A) and (B)). The control unit 19 also controls the probability state storage unit 11 to load probability state variables corresponding to the context indices (ctxIdx0) and (ctxIdx1) obtained by the context calculation unit 18 from the memory 12 to the register 13 in the subsequent two cycles (Fig. 7(C)). The control unit 19 controls the adaptive arithmetic coding/decoding unit 16 to execute a probability state selecting process of selecting the state indices (stateIdx) and MPS using the probability state variables loaded in the register 13, an arithmetic decoding process, and a binarization process (Fig. 7(D) to (F)).

Here, since the access latency of the register 13 is 0, the probability state selecting process, the arithmetic decoding process, and the binarization process start a process on the first binary value in cycles in which the probability state variables to be used in the process are stored in the register 13.

The control unit 19 controls the context calculation unit 18 to calculate contexts of the subsequent coefficient data (coeff abs level minus1 (1)) in a period in which the probability state selecting process, the arithmetic decoding process, and the binarization process are being executed with the adaptive arithmetic coding/decoding unit 16. In this embodiment, a context calculation process on the subsequent coefficient data (coeff abs level minus1 (1)) starts from a cycle immediately after the context calculations on the immediately preceding coefficient data (coeff abs level minus1 (0)) are completed.

Further, when the control unit 19 completes the context calculations on the subsequent coefficient data (coeff abs level minus1 (1)), the control unit 19 loads in the subsequent cycles the probability state variables of the context indices (ctxIdx2) and (ctxIdx3) obtained in these context calculations from the memory 12 to the register 13 and, prior to completing the process on the immediately preceding coefficient data (coeff abs level minus1 (0)), holds in advance these probability state variables in the register 13 so that the subsequent coefficient data (coeff abs level minus1 (1)) can be processed.

On the basis of the processing result of the adaptive arithmetic coding/decoding unit 16, the control unit 19 sequentially updates the probability state variables held in the register 13 and the memory 12 and, when the process on the immediately preceding coefficient data (coeff abs level minus1 (0)) is completed, instructs the adaptive arithmetic coding/decoding unit 16 to process the subsequent coefficient data (coeff abs level minus1 (1)).

Here, in the decoding apparatus 10, since the probability state variables of the context indices (ctxIdx2) and (ctxIdx3) necessary for processing the subsequent coefficient data (coeff abs level minus1 (1)) are stored in advance in the register 13, the adaptive arithmetic coding/decoding unit 16 can start, when completing processing the immediately preceding coefficient data (coeff abs level minus1 (0)), processing the subsequent coefficient data (coeff abs level minus1 (1)) in the subsequent cycle without giving rise to an idle time. Therefore, in the decoding apparatus 10, image data can be decoded at a higher speed, compared with the past.

Note that, when the control unit 19 instructs the adaptive arithmetic coding/decoding unit 16 to start processing the subsequent coefficient data (coeff abs level minus1 (1)), the control unit 19 simultaneously instructs the context calculation unit 18 to perform context calculations on the further subsequent coefficient data (coeff abs level minus1 (2)).

By the way, when context calculations on the subsequent coefficient data (coeff abs level minus1 (N)) are performed in advance and probability state variables are held in the register 13 by effectively utilizing a period in which the probability state variables stored in the register 13 are being processed, the case in which the storage of probability state variables into the register 13 is not completed at the time the adaptive arithmetic coding/decoding unit 16 starts processing the subsequent coefficient data (coeff abs level minus1 (N)) may occur. That is, the case where the storage of probability state variables into the register 13 is too late for a decoding process on each syntax element occurs.

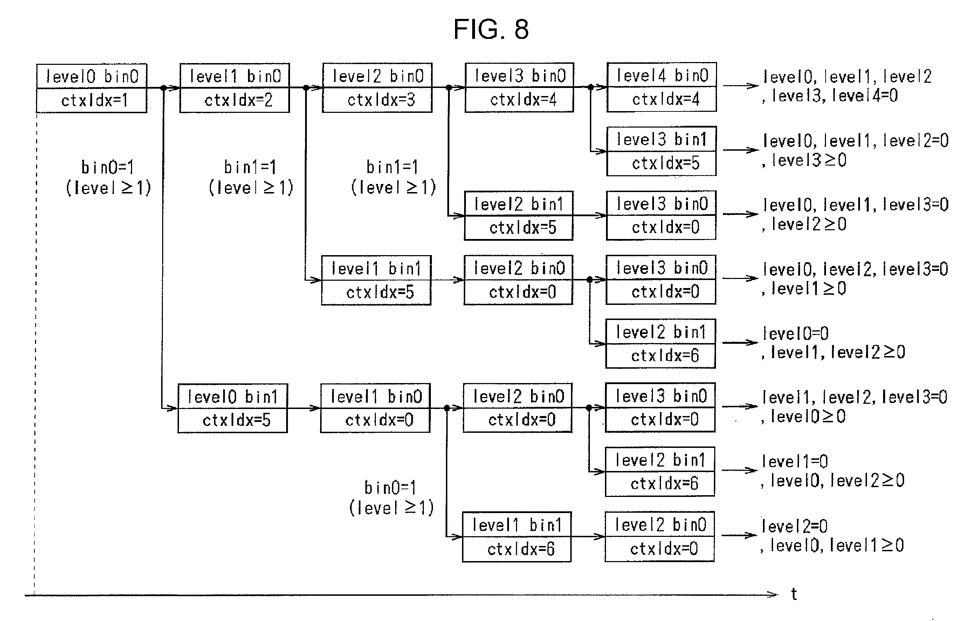

More specifically, Fig. 8 is a time chart that predicts context indices and probability state variables needed in the case where items of coefficient data (coeff level abs minus1) existing in a residual block are sequentially processed. Note that, in the example in Fig. 8, it is assumed that the value of each binary value of each item of coefficient data (coeff level abs minus1) is 0 or 1.

Here, in the first coefficient data (coeff level abs minus1 (0)) of the residual block, the context index (ctxIdx) is uniquely determined, and ctxIdx = 1. In the decoding apparatus 10, when the least significant binary value (level 0 bin 0) of the coefficient data (coeff level abs minus1 (0)) has the value 0, the decoding apparatus 10 proceeds to processing the subsequent coefficient data (coeff level abs minus1 (1)) and processes the least significant binary value (level 1 bin 0) of the subsequent coefficient data (coeff level abs minus1 (1)). Alternatively, in contrast to the foregoing, when the least significant binary value (level 0 bin 0) of the coefficient data (coeff level abs minus1 (0)) has the value 1, the decoding apparatus 10 is to process the subsequent more significant binary value (level 0 bin 1). Here, in the example in Fig. 8, it is assumed that the context indices (ctxIdx) of these binary values (level 1 bin 0) and (level 0 bin 1) are ctxIdx = 2 and ctxIdx = 5, respectively.

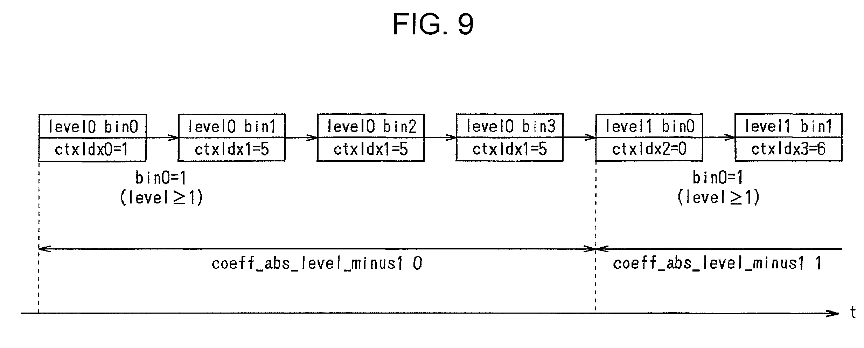

Further, in the example in Fig. 8, when the binary value (level 0 bin 1) subsequent to the first coefficient data (coeff level abs minus1 (0)) is selected, then the least significant binary value (level 1 bin 0) of the subsequent coefficient data (coeff level abs minus1 (1)) is to be processed. Further, when the least significant binary value (level 0 bin 0) of the coefficient data (coeff level abs minus1 (0)) has the value 0 and the least significant binary value (level 1 bin 0)) of the subsequent coefficient data (coeff level abs minus1 (1)) has the value 0 and the value 1, the least significant binary value (level 2 bin 0) of the subsequent coefficient data (coeff level abs minus1 (2)) and the subsequent binary value (level 2 bin 1) of the same coefficient data (coeff level abs minus1 (2)) are to be processed. Note that the rightmost indications in Fig. 8 show items of coefficient data up to corresponding transition destinations in the final transition destinations in Fig. 8. Further, Fig. 9 is a schematic diagram, although not corresponding to Fig. 8, showing a transition in the case where, in successive items of coefficient data, there is a sequence of a predetermined number of the individual binary values having the value 1.

Accordingly, when the example in Fig. 8 is to be processed, it is necessary to obtain the context indices ctxIdx = 1 and ctxIdx = 5 in context calculations on the first coefficient data (coeff level abs minus1 (0)), and to calculate the context indices ctxIdx = 0, ctxIdx = 2, ctxIdx = 5, and ctxIdx = 6 in in-advance context calculations on the subsequent coefficient data (coeff level abs minus1 (1)).

Here, each transition in the horizontal direction in Fig. 8 corresponds to 1 cycle in Fig. 7. Therefore, with the structure in Fig. 6, when context calculations are preliminarily performed and probability state variables are stored in the register 13, for the first coefficient data (coeff level abs minus1 (0)), after the probability state variables of the context indices ctxIdx = 1 and ctxIdx = 5 are stored in the register 13, the process starts. In this case, the probability state variables can be stored in the register 13 without being late for the start of processing the probability state variables at all.

Further, in processing the subsequent coefficient data (coeff level abs minus1 (1)), the probability state variables of the context indices ctxIdx = 0, ctxIdx = 2, ctxIdx = 5, and ctxIdx = 6 are needed. Here, the context indices ctxIdx = 2 and ctxIdx = 5 on the bin = 0 side where the processing of the least significant binary value is switched to the processing of the next coefficient data are stored in the register 13 in preference to the context indices ctxIdx = 0 and ctxIdx = 6 on the bin = 1 side where the processing of the least significant binary value is switched to the processing of the subsequent more significant binary value. Further, when the probability state variables are stored in the register 13, starting from a context index corresponding to a binary value on the low order side, at the time the least significant binary value (level 0 bin 0) of the first coefficient data (coeff level abs minus1 (0)) is completed, the probability state variable of the context index ctxIdx = 2 necessary to process the least significant binary value (level 1 bin 0) of the subsequent coefficient data (coeff level abs minus1 (1)) in the case where bin = 0 can be held in the register 13. Also, at the time processing of the least significant binary value (level 1 bin 0) is completed, the probability state variable of the context index ctxIdx = 5 necessary to process the subsequent least significant binary value (level 1 bin 1) in the case where bin = 1 can be held in the register 13. Therefore, also in this case, the probability state variables can be stored in the register 13 without being too late for the processing of the subsequent coefficient data (coeff level abs minus1 (1)) at all.

However, when this case is the case where the least significant binary value (level 0 bin 0) of the first coefficient data (coeff level abs minus1 (0)) is bin = 1, at the time the processing of the subsequent more significant binary value (level 0 bin 1) is completed, the probability state variable of the context index ctxIdx = 0 necessary to process the least significant binary value (level 1 bin 0) of the subsequent coefficient data (coeff level abs minus1 (1)) is not prepared in the register 13. The storage of the probability state variable into the register 13 becomes too late for a decoding process on the syntax element.

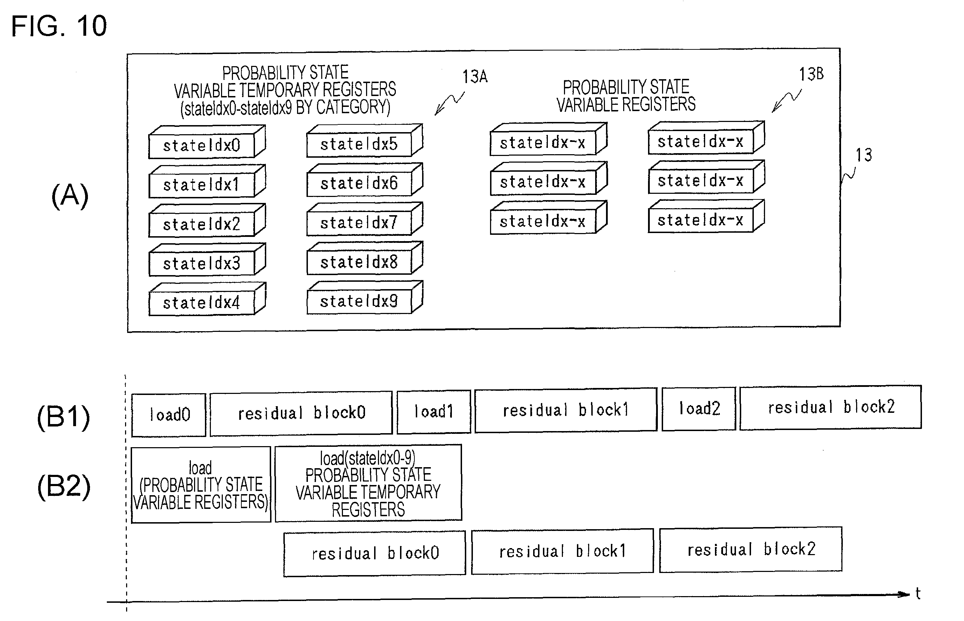

Accordingly, as shown in Fig. 10(A), in the decoding apparatus 10, the register 13 is formed by a predetermined number of probability state variable temporary registers 13A and a predetermined number of probability state variable registers 13B. Here, the probability state variable temporary registers 13A are registers that load and store probability state variables from the memory 12 in parallel to context calculations, an arithmetic decoding process, and the like, as has been described above with Fig. 7. The probability state variable registers 13B are registers that store in advance probability state variables whose storage into the register 13 will be too late for a decoding process on a syntax element before starting processing a residual layer.

Here, context indices (ctxIdx) for syntax elements of coefficient data are classified into 6 categories according to type, i.e., AC component, DC component, luma signal (Y) component, and chroma signal (Cr, Cb) components. In each category, there are 9 to 10 types of context indices (ctxIdx). Also, since the category is uniquely selected in each residual block, after all, there are 9 types or 10 types of context indices (ctxIdx) used in one category. Accordingly, the probability state variable temporary registers 13A are provided for the individual categories. In each category, 10 probability state variable temporary registers 13A are provided at a maximum so as to be capable of holding probability state variables corresponding to these 9 types or 10 types of context indices.

Note that the number of probability state variables that can be stored in the register 13 in 1 cycle changes in accordance with the data transfer capability for transfer from the memory 12 to the register 13, and, in accordance with a change in this number, the number of probability state variables that are too late to be stored changes. Moreover, the number of probability state variables that are too late to be stored changes depending on the context index (ctxIdx) transition in coefficient data determined by the format. Therefore, the number of probability state variable temporary registers and the number of probability state variable registers can be variously set in accordance with the data transfer capability for transfer from the memory 12 to the register 13 and in accordance with the context index (ctxIdx) transition in coefficient data determined by the format. Note that the structure of the probability state variable registers 13B may be omitted since, in one syntax element, it is regarded that the data transfer capability for transfer from the memory 12 to the register 13 is sufficient for the maximum number of context indices that can be obtained by context calculations, that is, more specifically, for example, it is regarded that the probability state variables of all the context indices obtained by context calculations can be transferred to the register 13 in 1 cycle.

In association with the structure of the register 13, as shown in Fig. 10(B2), the control unit 19 preliminarily loads into the probability state variable registers 13B the probability state variables that may be too late to be stored into the register 13 in an initialization process at the start of processing the residual block. Note that the probability state variables that may be too late to be stored into the register 13 can be obtained from the rule of the context index transition in coefficient data (coeff level abs minus1).

Furthermore, when the preliminary loading is completed, processing of each residual block starts one after another. While the probability state variables obtained by context calculations are being stored into the probability state variable temporary registers 13A, each syntax element is decoded. Note that, in this case, the operation of the probability state storage unit 11 is controlled so as to omit the storage from the memory 12 to the probability state variable temporary registers 13A of the probability state variables of the context indices that have already been stored in the probability state variable temporary registers 13A. Note that the storage of the probability state variables of the context indices that have already been stored in the probability state variable registers 13B into the probability state variable temporary registers 13A may be omitted.

Note that Fig. 10(B1) is a time chart showing the case in which, when the processing of each residual block starts, all corresponding probability state variables are loaded from the memory 12 to the register 13. As shown in Fig. 10(B1), by loading in advance all the corresponding probability state variables into the register 13, the case in which the loading of the probability state variables into the register 13 becomes too late for a decoding process on each syntax element can be avoided.

However, in this case, it is necessary to load all the corresponding probability state variables from the memory 12 to the register 13 at the start of processing each residual block. In contrast, in the decoding apparatus 10, necessary probability state variables are loaded into the register 13 while processing a syntax element. Only probability state variables that may be too late for a loading process are required to be stored in advance in the register 13. This allows the processing time to be significantly reduced, compared with the case shown in Fig. 10(B1), when viewed as a whole, and image data can be efficiently processed.

### (2) Operation of Embodiment 1

In the foregoing structure, the types of syntax elements in a sequentially input bitstream (Fig. 6 and Fig. 7) are sequentially detected by the adaptive arithmetic coding/decoding unit 16. Further, under control of the control unit 19 on the basis of the detection result of the adaptive arithmetic coding/decoding unit 16, contexts of each syntax element are sequentially calculated by the context calculation unit 18, and context indices (ctxIdx) that may be taken by the individual bits of the binarized syntax element are obtained. In the bitstream, the state indices (stateIdx) and MPS are sequentially selected by the adaptive arithmetic coding/decoding unit 16 on the basis of the probability state variables of the context indices (ctxIdx), and the original syntax element is decoded by processing the selection result.

In the decoding apparatus 10, according to the type of syntax element detected by the adaptive arithmetic coding/decoding unit 16, when a syntax element with a low frequency of appearance is to be decoded, the adaptive arithmetic coding/decoding unit 16 accesses the memory 12 which is provided in the probability state storage unit 11 and which is the first memory whose access latency is large. The probability state variables of the context indices (ctxIdx) obtained by the context calculation unit 18 are detected. Further, a decoding process on the original syntax element is performed using the detected probability state variables. Since the memory 12 is formed by an SRAM, regarding a structure of the decoding apparatus 10 which decodes such a syntax element with a low frequency of appearance, the overall shape can be reduced in size.

However, when the SRAM memory 12 is used to process all syntax elements, as has been described above about the decoding apparatus 1 having a conventional structure in Fig. 3, it becomes difficult to perform decoding at a high speed.

Therefore, in the decoding apparatus 10, when a syntax element with a high frequency of appearance is to be decoded, the probability state variables of the context indices (ctxIdx) obtained by the context calculation unit 18 are loaded from the memory 12 to the register 13 which is the second memory whose access latency is large compared with the first memory and held in the register 13. Using the probability state variables stored in the register 13, a decoding process on the syntax element with a high frequency of appearance is performed. Therefore, the decoding apparatus 10 can execute a process on a syntax element with a high frequency of appearance at a high speed, although the shape thereof is increased in size.

Here, in this type of decoding apparatus, syntax elements such as a macroblock type and a sub-macroblock type exit as syntax elements with a low frequency of appearance. Each of these syntax elements only appears once when one macroblock is processed.

In contrast, DC coefficient data and AC coefficient data exist as syntax elements with a high frequency of appearance. Among them, AC coefficient data appears, in the case of 4:2:0 image data, 15 successive times, which means 15x4x6 = 360 times, when one macroblock is processed. Also, DC coefficients appear 6 times when one macroblock is processed. Therefore, as in the decoding apparatus 10, when the register 13 is used only for syntax elements with a high frequency of appearance, the processing speed can be significantly increased, compared with the past, without involving a large increase in size of the structure, when viewed as a whole, by making use of the advantageous effects of the two in the case where the register 13 and the memory 12 are used.

Also in the decoding apparatus 10, not only the probability state variables for syntax elements with a high frequency of appearance are held in the register 13, but also the probability state variables of the context indices (ctxIdx) obtained by the context calculation unit 18 are selectively loaded from the memory 12 to the register 13, and a decoding process is performed using these loaded probability state variables. Consequently, the register 13 only needs to be configured to be capable of storing only a portion of the probability state variables of all the context indices (ctxIdx) needed to process coefficient data. Specifically, the number of all the probability state variables needed to process coefficient data is 59 types. Therefore, because the register 13 only needs to be configured to be capable of storing only a portion of the probability state variables of all the context indices (ctxIdx) needed to process the coefficient data, an increase in size of the overall structure can be avoided, and the processing speed can be increased, compared with the past.

Also in the decoding apparatus 10, the probability state variables are selectively loaded from the memory 12 to the register 13 and held in the register 13. In a period in which the probability state variables held in the register 13 are being processed, more specifically, in a period in which the adaptive arithmetic coding/decoding unit 16 performs a probability state selecting process, an arithmetic decoding process, and a binarization process on one item of coefficient data (coeff abs level Minus1 (0)), context calculations are performed on the subsequent coefficient data (coeff abs level minus1 (1)), and corresponding probability state variables are stored in the register 13. Further, the probability state variables stored in the register 13 are updated in accordance with the result of a decoding process. Therefore, in the decoding apparatus 10, at the time a process on the subsequent coefficient data (coeff abs level minus1 (1-N)) starts, the probability state variables are already held in the register 13. A process on the subsequent coefficient data (coeff abs level minus1 (1-N)) can be started immediately after completing a process on the immediately preceding coefficient data. This also increases the processing speed even more. In particular, when high-resolution image data is to be processed, the processing speed can be significantly increased, compared with the past.

That is, for example, in the case of a high resolution (1920x1088) which is higher than or equal to level 4 standardized in ITU-T H.264, according to this embodiment, compared with the above-described conventional structure in Fig. 5, an idle time of 693 cycles can be reduced in one macroblock. According to the experimental result, decoding can be sufficiently performed even when the operation speed is reduced by about 170 [MHz] compared with the conventional structure.

However, when context calculations on the subsequent coefficient data (coeff abs level minus1 (N)) are performed in advance and probability state variables are held in the register 13 by effectively utilizing a period in which the probability state variables stored in the register 13 are being processed, the case in which the storage of probability state variables into the register 13 is too late for a decoding process on each syntax element may occur depending on the context index (ctxIdx) transition in coefficient data (Fig. 8 and Fig. 9).

Accordingly, in this embodiment, the register 13 is formed by the probability state variable temporary registers 13A and the probability state variable registers 13B. Regarding the probability state variables that may be too late to be stored into the register 13, the probability state variables are loaded from the memory 12 to the probability state variable registers 13B in advance and held in the probability state variable registers 13B at the start of processing a residual block. Further, other probability state variables are loaded from the memory 12 as needed and held in the probability state variable temporary registers 13A while processing each syntax element.

As a result, in the decoding apparatus 10, the probability state variables needed to process subsequent coefficient data (coeff abs level minus1 (N)) are held in advance in the register 13 by effectively utilizing a period in which the probability state variables stored in the register 13 are being processed, thus increasing the processing speed. The occurrence of an idle time, which is due to the fact that the storage of the probability state variables into the register 13 is too late and the decoding apparatus 10 waits for completion of the storage of the probability state variables into the register 13, can be effectively avoided. Therefore, because the occurrence of an idle time is effectively avoided, the processing speed can be increased.

### (3) Advantageous Effects of Embodiment 1

According to the foregoing structure, syntax elements with a high frequency of appearance are decoded and processed using probability state variables held in the second memory whose access latency is small, and other syntax elements are decoded using probability state variables held in the first memory whose access latency is large, thus avoiding an increase in size of the overall structure and increasing the processing speed compared with the past.

Also, by applying coefficient data to syntax elements with a high frequency of appearance for which the probability state variables held in the second memory are used, an increase in size of the overall structure can be avoided more specifically, and the processing speed can be increased, compared with the past.

Further, since the second memory whose access latency is small is the register, successive processes can be executed with an access latency of 0, and the processing speed can be increased more specifically.

Further, by selectively loading the probability state variables held in the first memory into the second memory in accordance with the context calculation result and using the loaded probability state variables, the capacity of the second memory can be suppressed to a required minimum size, and an increase in size of the overall shape can be avoided.

Further, by performing context calculations on the subsequent syntax element and storing probability state variables in the register 13 in a period in which the probability state variables held in the second memory are being processed, the processing speed can be increased even more.

Further, by performing context calculations on the subsequent syntax element and storing probability state variables in the register 13 in a period in which the probability state variables held in the second memory are being processed, the processing speed is increased. The probability state variables that may be too late to be stored into the second memory are loaded and held in the second memory at the start of the process. This effectively avoids the occurrence of an idle time in which the process waits for completion of storage of the probability state variables into the register 13, and the processing speed can be increased.

### (4) Embodiment 2

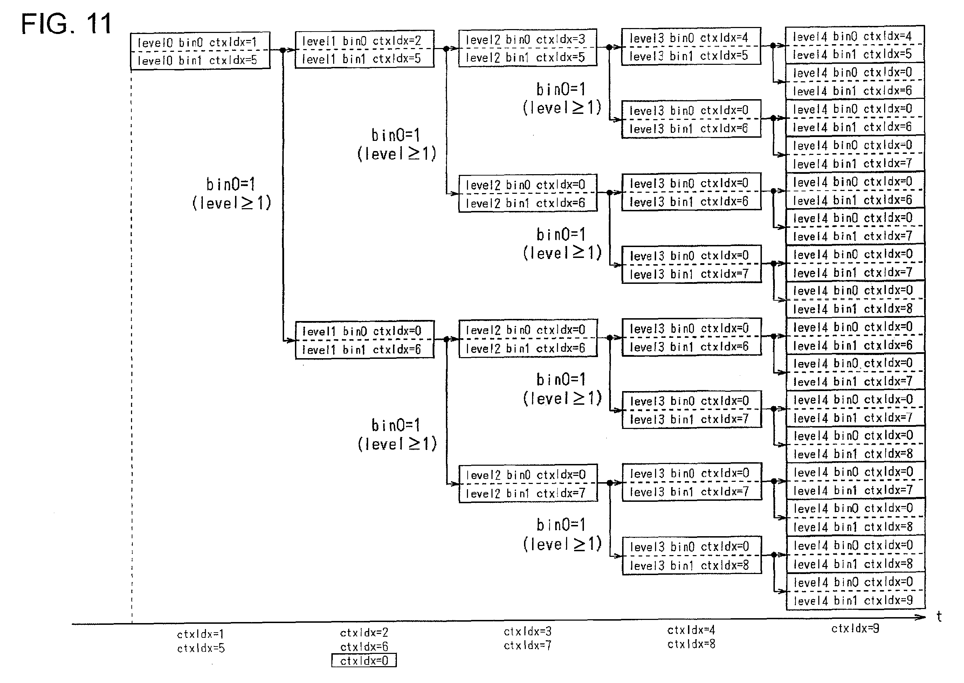

Fig. 11 is a time chart provided to describe a decoding apparatus of an embodiment 2 of the present invention, in contrast to Fig. 8. Note that, in this embodiment, the decoding apparatus is configured in the same manner as the embodiment 1 except for a structure relating to the time chart shown in Fig. 11. Therefore, in the following description, the structure in Fig. 6 is used to give the description. This decoding apparatus 20 processes two successive binary values of each syntax element simultaneously in parallel.

Therefore, in the decoding apparatus 20, the probability state storage unit 11, the context calculation unit 18, the adaptive arithmetic coding/decoding unit 16, a binarization unit 7, and the control unit 19 execute processes in two successive cycles described with Fig. 8 in 1 cycle so as to be able to process successive two binary values simultaneously in parallel. Therefore, the probability state storage unit 11 stores, in the register 13, probability state variables of two context indices in 1 cycle.

Also, the adaptive arithmetic coding/decoding unit 16 switches the access destination of the register 13 by switching a transition destination in Fig. 11 in accordance with the processing results of the two binary values processed simultaneously in parallel. Further, when a binary value on the low order side is processed and a subsequent binary value on the high order side becomes unnecessary, that is, more specifically, when the binary value on the low order side is bin = 0, a process on the subsequent binary value on the high order side is terminated. Therefore, in the example in Fig. 11, when the first binary value level 0 bin 0 and the subsequent binary value level 0 bin 1 are processed simultaneously in parallel, in the case where the first binary value level 0 bin 0 is bin = 0, a process on a probability state variable selected with the subsequent binary value level 0 bin 1 is terminated.

Also, when the first binary value level 1 bin 0 and the subsequent binary value level 1 bin 1 of the subsequent coefficient data are processed simultaneously in parallel, in the case where the first binary value level 1 bin 0 is also bin = 0, a process on a probability state variable selected with the subsequent binary value level 1 bin 1 is terminated.

Here, in the case where processes are performed in the example in Fig. 11, when the binary value level 0 bin 0 is bin = 0, probability state variables of the context indices ctxIdx = 2 and ctxIdx = 5 are needed for processing with the adaptive arithmetic coding/decoding unit 16 in processing in the second cycle. Also, when the binary values level 0 bin 0 and level 0 bin 1 are bin = 1, probability state variables of the context indices ctxIdx = 0 and ctxIdx = 6 are needed for processing with the adaptive arithmetic coding/decoding unit 16 in processing in the second cycle.

Therefore, at the start of the second cycle, it is necessary to prepare in the register 13 the probability state variables of the context indices ctxIdx = 0, ctxIdx = 2, ctxIdx = 5, and ctxIdx = 6. Consequently, as enclosed and indicated by a rectangle in Fig. 11, for example, the storage of the probability state variable of the context index ctxIdx = 0 into the register 13 is too late for a process.

Therefore, even in the example in Fig. 11, as has been described in the embodiment 1, the probability state variable temporary registers 13A and the probability state variable registers 13B are provided in the register 13. The probability state variables that may be too late for a process are stored in advance in the probability state variable registers 13B.

According to this embodiment, the same advantageous effects as the embodiment 1 can be achieved even when two successive binary values of each syntax element are processed simultaneously in parallel.

### (5) Embodiment 3

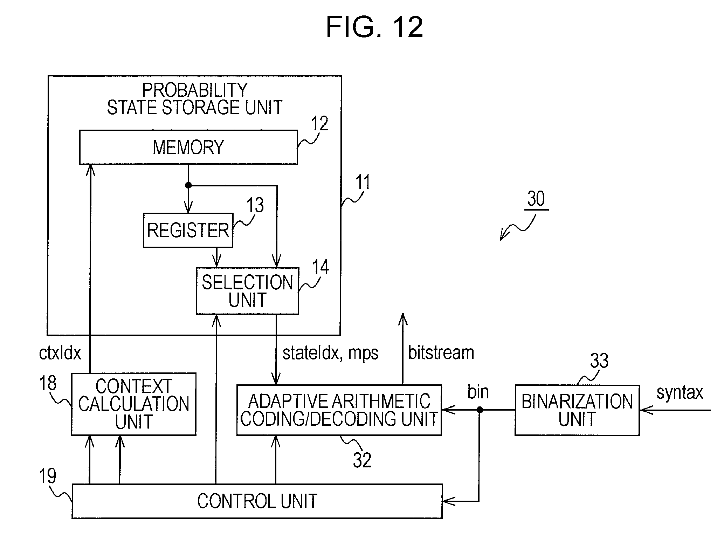

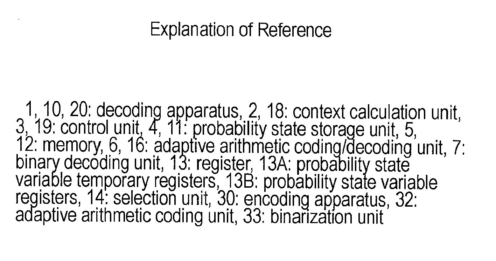

Fig. 12 is a block diagram showing an encoding apparatus of an embodiment 3 of the present invention. This encoding apparatus 30 can sequentially perform an orthogonal transform process, a quantization process, and the like on image data of a moving image in accordance with the format of ITU-T H.264 to generate syntax elements, processes the syntax elements, and outputs a bitstream. In this coding process, the encoding apparatus 30 sequentially performs a coding process on the syntax elements based on a context-based adaptive binary arithmetic coding process using the probability state storage unit 11 and the context calculation unit 18 described above in the embodiments 1 and 2 and outputs a bitstream.

That is, a binarization unit 33 sequentially binarizes syntax elements to be encoded and processed, in contrast to the above-described binary decoding unit 7 in Fig. 6. An adaptive arithmetic coding unit 32 sequentially processes, as in the above-described adaptive arithmetic coding/decoding unit 16 in Fig. 6, the probability state variables stored in the register 13 and the memory 12 of the probability state storage unit 11, sequentially encodes and processes binarized data generated by the binarization unit 33, and outputs a bitstream.

When the invention is applied to an encoding apparatus as in this embodiment, the same advantageous effects as the embodiments 1 and 2 can be achieved.

### (6) Other Embodiments

In the above-described embodiments, the cases in which context-based adaptive binary arithmetic coding and context-based adaptive binary arithmetic decoding processes are performed in the format of ITU-T H.264 have been described. However, the present invention is not limited thereto. The present invention is widely applicable to cases in which context-based adaptive binary arithmetic coding and context-based adaptive binary arithmetic decoding processes are performed in various formats other than this format.

### Industrial Applicability

The present invention relates to a moving image processing method, a program of the moving image processing method, a recording medium having the program of the moving image processing method recorded thereon, and a moving image processing apparatus, and is applicable to, for example, an encoding apparatus and a decoding apparatus for moving images based on ITU-T H.264.

## Claims

1. A moving image processing method of calculating contexts and encoding or decoding a moving image, **characterized by** comprising:
a context calculation processing step of calculating contexts of syntax elements constituting the moving image and sequentially detecting probability state variables that may be taken by the syntax elements; and
a probability state variable processing step of sequentially selecting and processing the probability state variables obtained in the context calculation processing step and encoding or decoding the syntax elements,
wherein the probability state variable processing step includes
a probability state variable selecting step of selecting the probability state variables held in a probability state storage unit,
wherein a first memory and a second memory whose access latency is small compared with the first memory are provided in the probability state storage unit, and
wherein the probability state variable selecting step
sequentially selects the probability state variables from the first memory when processing the syntax elements which have a low frequency of appearance, and
sequentially selects the probability state variables from the second memory when processing the syntax elements which have a high frequency of appearance.

2. The moving image processing method according to Claim 1, **characterized in that**
the syntax elements which have a high frequency of appearance are coefficient data obtained by performing an orthogonal transform process on image data forming the moving image in units of predetermined blocks.

3. The moving image processing method according to Claim 1, **characterized in that**
the second memory is a register.

4. The moving image processing method according to Claim 1, **characterized in that**
the first memory
holds the probability state variables needed to process all the syntax elements, and
the moving image processing method comprises
a second memory writing step of reading a portion of the probability state variables held in the first memory and storing the read portion of the probability state variables in the second memory.

5. The moving image processing method according to Claim 4, **characterized in that**
the context calculation processing step
calculates contexts of a subsequent syntax element and detects the probability state variables of the subsequent syntax element in a period in which the probability state variables are being processed in the probability state variable processing step, and
the second memory writing step
stores in the second memory the probability state variables of the subsequent syntax element, which are detected in the context calculation processing step, in the period in which the probability state variables are being processed in the probability state variable processing step.

6. The moving image processing method according to Claim 5, **characterized in that**
among the probability state variables likely to be detected in the syntax elements which have a high frequency of appearance, in processing in the second memory writing step, there is provided a preprocessing step of storing, in advance, from the first memory to the second memory, the probability state variables that are too late for the start of processing of the probability state variables of the subsequent syntax element in the probability state variable processing step.

7. A program of a moving image processing method of calculating contexts and encoding or decoding a moving image, **characterized by** comprising:
a context calculation processing step of calculating contexts of syntax elements constituting the moving image and sequentially detecting probability state variables that may be taken by the syntax elements; and
a probability state variable processing step of sequentially selecting and processing the probability state variables obtained in the context calculation processing step and encoding or decoding the syntax elements,
wherein the probability state variable processing step includes
a probability state variable selecting step of selecting the probability state variables held in a probability state storage unit,
wherein a first memory and a second memory whose access latency is small compared with the first memory are provided in the probability state storage unit, and
wherein the probability state variable selecting step
sequentially selects the probability state variables from the first memory when processing the syntax elements which have a low frequency of appearance, and
sequentially selects the probability state variables from the second memory when processing the syntax elements which have a high frequency of appearance.

8. A recording medium having recorded thereon a program of a moving image processing method of calculating contexts and encoding or decoding a moving image,
the program of the moving image processing method **characterized by** comprising:
a context calculation processing step of calculating contexts of syntax elements constituting the moving image and sequentially detecting probability state variables that may be taken by the syntax elements; and
a probability state variable processing step of sequentially selecting and processing the probability state variables obtained in the context calculation processing step and encoding or decoding the syntax elements,
wherein the probability state variable processing step includes
a probability state variable selecting step of selecting the probability state variables held in a probability state storage unit,
wherein a first memory and a second memory whose access latency is small compared with the first memory are provided in the probability state storage unit, and
wherein the probability state variable selecting step
sequentially selects the probability state variables from the first memory when processing the syntax elements which have a low frequency of appearance, and
sequentially selects the probability state variables from the second memory when processing the syntax elements which have a high frequency of appearance.

9. A moving image processing apparatus that calculates contexts and encodes or decodes a moving image, **characterized by** comprising:
a context calculation unit that calculates contexts of syntax elements constituting the moving image and sequentially detects probability state variables that may be taken by the syntax elements;
a probability state storage unit in which a first memory and a second memory whose access latency is small compared with the first memory are provided, the probability state variables being held in the first and second memories; and
a probability state variable processing unit that sequentially selects and processes the probability state variables from the probability state storage unit on the basis of a detection result of the context calculation unit, and encodes or decodes the syntax elements,
wherein the probability state variable processing unit
sequentially selects the probability state variables from the first memory when processing the syntax elements which have a low frequency of appearance, and
sequentially selects the probability state variables from the second memory when processing the syntax elements which have a high frequency of appearance.
